# FASCICULE DE BREVET EUROPEEN

(11) **EP 0 757 026 B1**
(45) Date de publication et mention de la délivrance du brevet: **14.06.2000**
(21) Numéro de dépôt: 96401316.3
(22) Date de dépôt: 18.06.1996
(51) Int. Cl.: C06D 5/06, B60R 21/26

(54) **Générateur pyrotechnique de gaz chauds pour coussin latéral de protection**
Heisses Gas-erzeugender pyrotechnischer Gasgenerator für Seitenaufprallschutz-Airbag
Pyrotechnic hot gas generator for airbag used for side impact protection

(30) Priorité: 04.08.1995 FR 9509497
(43) Date de publication de la demande: 05.02.1997
(73) Titulaire: S.N.C. LIVBAG, 91710 Vert Le Petit (FR)
(72) Inventeur: Marsaud, Benoit, 27830 Neaufles Saint Martin (FR); Perotto, Christian, 91610 Ballancourt (FR); Duvacquier, Daniel, 33300 Bordeaux (FR)
(74) Mandataire: Pech, Bernard

(56) Documents cités:
- WO-A-93/09977
- DE-B- 1 242 053
- FR-A- 2 682 374
- GB-A- 1 061 390
- US-A- 3 972 545
- US-A- 5 031 932

## Description

La présente invention se rapporte au domaine de la protection, en cas de collision, des occupants d'un véhicule automobile au moyen d'un coussin de protection gonflé par des gaz provenant d'un générateur pyrotechnique de gaz.

Plus précisément l'invention concerne un générateur pyrotechnique de gaz chauds, utile notamment pour gonfler un coussin latéral de protection des occupants d'un véhicule automobile.

Depuis plus d'une vingtaine d'années il a été proposé de protéger, en cas de choc frontaux, les occupants, conducteur et passagers, d'un véhicule et automobile au moyen de coussins gonflables disposés devant eux.

Différents types de générateur pyrotechniques ont été proposés à cette fin.

Il a été proposé par exemple par les brevets français 2 116 948 et 2 116 949 qui correspondent aux brevets américains US-A-3,882,673 et US-A-3,813,007 des générateurs pyrotechniques de gaz dont les gaz proviennent pour une partie de la combustion d'un chargement pyrotechnique de gaz et pour une autre partie de la vaporisation d'un liquide contenu dans une enceinte placée à proximité du dit chargement pyrotechnique. Il a également été proposé par le brevet US 5,031,932 un générateur de gaz hybride qui n'est pas soumis aux délais de fonctionnement des générateurs pour coussins latéraux. Ce générateur hybride comprend, d'une part, un réservoir de gaz froid inerte, et d'autre part, un chargement pyrotechnique sous la forme d'un bloc en forme de trèfle comprenant un canal dans chaque lobe du trèfle. Ce chargement pyrotechnique est alors destiné à réchauffer le gaz froid contenu dans le réservoir de manière à ce que le volume de gaz libéré soit suffisant pour gonfler totalement le coussin de protection. De tels générateurs ont une structure relativement complexe qui leur confère un prix de revient élevé.

L'homme de métier s'est alors tourné vers des générateurs dont l'intégralité des gaz provenait de la combustion d'un chargement solide.

C'est ainsi que le brevet américain US-A-5,160,163 propose un générateur pyrotechnique de gaz, de forme générale circulaire, plus spécialement conçu pour la protection du conducteur d'un véhicule automobile et que le brevet européen EP-B-0 404 572 propose un générateur pyrotechnique de gaz, de forme générale cylindrique allongée, plus spécialement conçu pour la protection du passager avant d'un véhicule automobile.

Plus récemment l'homme de métier s'est également intéressé au problème de la protection par coussin gonflable des occupants d'un véhicule automobile en cas de chocs latéraux et non plus frontaux. Ce problème et sa solution au moyen de coussins latéraux disposés dans le dossier des sièges du véhicule est évoqué, par exemple, dans le brevet américain US-A-5,112,079.

Depuis il s'est malheureusement avéré que les générateurs pyrotechniques traditionnels pour coussins frontaux ne conviennent absolument pas pour assurer un gonflage correct et fiable des coussins latéraux de protection.

En effet si, pour être fiable, un coussin de protection frontal doit pouvoir être gonflé dans un laps de temps voisin de 50 millisecondes après la détection de l'impact et nécessite donc un chargement pyrotechnique qui brûle complètement dans ce laps de temps ; un coussin latéral de protection doit pouvoir être gonflé dans un laps de temps voisin de 10 millisecondes après la détection de l'impact.

Or l'homme de métier ne dispose pas, avec les solutions connues jusqu'à présent, d'un générateur et d'un chargement pyrotechnique qui garantissent une combustion complète dans un laps de temps de 10 millisecondes.

Les générateurs avec réservoir de liquide ou les générateurs dans lesquels le chargement est sous forme de bloc plein, ont intrinsèquement des temps de réponse trop longs.

Les générateurs dont le chargement est constitué par un fagot de brins creux de poudre génératrice de gaz ne permettent pas de garantir, dans les conditions de pression et de température requises pour une combustion aussi rapide, la tenue mécanique du fagot et donc la fiabilité de la réponse du générateur.

Enfin les générateurs dans lesquels la composition pyrotechnique est sous forme de grains de poudre ou de pastilles, comme décrit par exemple dans le brevet EP-B- 0 404 572 sus-mentionné, ne permettent pas de maîtriser la loi de combustion et, avec ce type de solutions, l'homme de métier n'est pas à l'abri de risques d'explosion du générateur.

L'homme de métier est donc à la recherche de générateurs pyrotechniques garantissant un gonflement fiable des coussins latéraux de protection des occupants d'un véhicule automobile.

L'objet de la présente invention est précisément de proposer un générateur pyrotechnique de gaz qui permette de maîtriser, et donc de garantir, une loi de combustion complète dans un laps de temps de l'ordre de 10 millisecondes et donc de répondre au problème posé.

L'invention concerne donc un générateur pyrotechnique de gaz chauds destiné notamment à gonfler un coussin latéral de protection comportant un corps cylindrique creux qui présente une paroi latérale terminée par deux faces sensiblement planes et dont la longueur des génératrices est supérieure à son diamètre extérieur, ledit corps contenant notamment un inflammateur et un chargement pyrotechnique solide générateur de gaz séparé de l'inflammateur par une grille métallique de séparation, ladite paroi latérale étant pleine sur toute la longueur de chacune de ses génératrices et chacune des faces planes présentant une ouverture, ledit inflammateur étant fixé dans l'une desdites ouvertures, une tuyère elle-même fermée par un opercule étant fixée dans l'autre ouverture et ledit chargement pyrotechnique étant sous la forme d'un bloc perforé par une pluralité de canaux parallèles à l'axe dudit bloc qui est lui-même disposé entre l'inflammateur et la tuyère de manière à ce que lesdits canaux soient parallèles à l'axe du corps du générateur, caractérisé en ce que les canaux sont des canaux cylindriques et en ce que le bloc de chargement pyrotechnique présente des épaisseurs radiales à brûler toutes identiques, ledit bloc possédant un canal central et présentant une géométrie qui permet un allumage simultané par les surfaces internes desdits canaux et par la surface latérale du bloc.

Selon un premier mode préféré de réalisation, en se situant dans un plan transversal au bloc, les centres des canaux périphériques ne sont pas équidistants du centre du dit bloc mais se répartissent alternativement, dans ce plan, sur deux cercles concentriques distincts.

Préférentiellement, le chargement pyrotechnique est constitué soit par une composition pyrotechnique à base de nitrocellulose et de nitroglycérine, soit par une composition pyrotechnique composite comprenant essentiellement une résine silicone comme liant et un mélange de perchlorate d'ammonium et de nitrate de sodium comme base énergétique.

Le choix de ces compositions pyrotechnique permet d'utiliser des générateurs très simples sans chambre de filtration.

Avantageusement, le chargement pyrotechnique repose sur un ressort lui-même en appui sur la grille de séparation.

Selon un second mode préféré de réalisation de l'invention le générateur est prolongé, du côté du corps où est fixée la tuyère, par un diffuseur cylindrique creux qui comprend :
i) une extrémité fermée,
ii) une extrémité ouverte qui se fixe sur l'extrémité du corps du générateur qui porte la tuyère,
iii) un évent latéral ou des trous latéraux d'évacuation des gaz.

L'invention concerne également l'utilisation d'un tel générateur pour gonfler un coussin latéral de protection des occupants d'un véhicule automobile.

La structure très simple du générateur associée à la géométrie particulière du bloc permet à l'homme de métier de maîtriser parfaitement la loi de combustion du bloc qui brûle simultanément sur toute sa hauteur en couches parallèles radiales à partir de toutes ses surfaces d'allumage. Le choix de l'épaisseur radiale uniforme à brûler, compte tenu de la vitesse de combustion de la composition pyrotechnique, permet ainsi de garantir une combustion complète du chargement en un laps de temps de 10 milliscondes sans risque de passage en détonation. Le choix de la hauteur du chargement détermine la quantité de gaz fournie par le générateur.

Le fait que les différents composants fonctionnels du générateur : inflammateur, chargement et tuyère, soient disposés dans le sens de l'écoulement gazeux réduit au minimum les pertes de charges et favorise le fonctionnement du générateur, et notamment la rapidité de l'allumage.

En général la pression de fonctionnement d'un générateur selon l'invention sera voisine de 20 MPa soit 200 bar.

On décrit ci-après le mode préféré de réalisation de l'invention en se référant aux figures 1 à 4.

La figure **1** représente, vu en coupe, un générateur selon l'invention muni de son diffuseur.

La figure **2** représente, vu en coupe, le seul générateur selon l'invention.

la figure **3** est une vue de face d'un bloc de chargement pyrotechnique utilisable dans le cadre de la présente invention.

La figure **4** est une vue en perspective, partiellement éclatée, du bloc représenté à la figure 3.

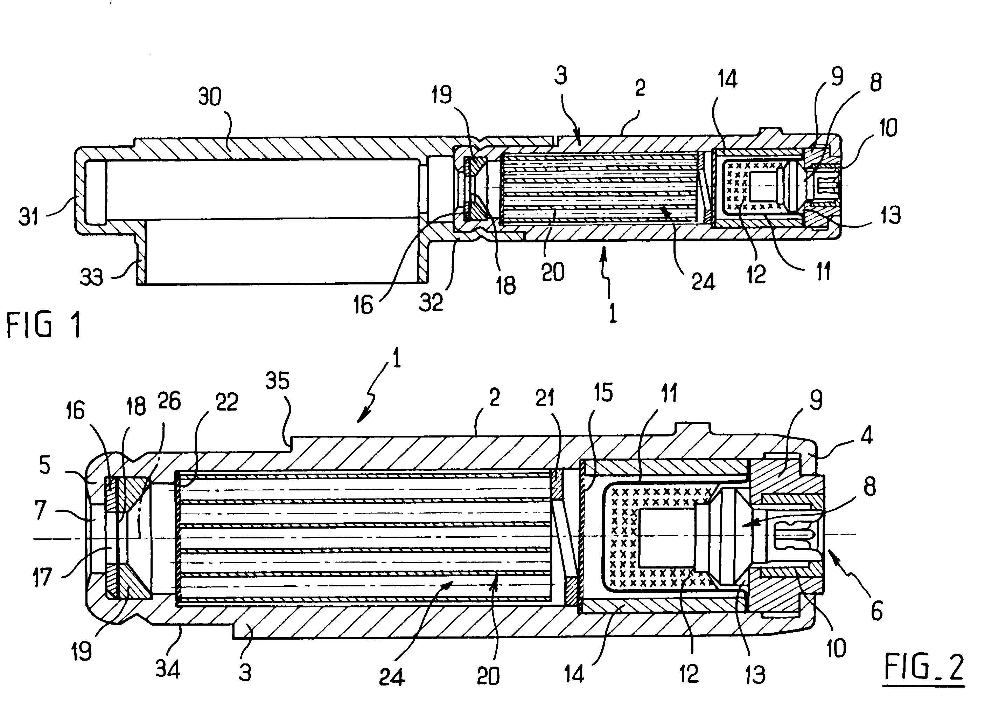

En se reportant plus particulièrement aux figures 1 et 2, on observe qu'un générateur pyrotechnique 1 de gaz chauds selon l'invention comporte un corps cylindrique creux 2 dont la longueur **L** des génératrices est supérieure à son diamètre extérieur **D**. Préférentiellement le rapport entre la longueur des génératrices et le diamètre extérieur sera compris entre 3 et 4. Le corps 2 présente ainsi une paroi latérale 3 qui est terminée par deux faces sensiblement planes 4 et 5.

Selon une première caractéristique de l'invention la dite paroi latérale 3 est pleine sur toute la longueur de chacune de ses génératrices et chacune des faces planes 4 ou 5 présente une ouverture 6 ou 7.

Le corps 2 ne présente ainsi que deux ouvertures disposées chacune à une des extrémités du dit corps. Le corps 2 est constitué par un métal pouvant subir une opération de sertissage, par exemple un acier inoxydable ou un alliage de zinc et d'aluminium du type "ZAMAK".

Un inflammateur 8 est fixé dans l'ouverture 6 présentée par ledit corps creux 2. L'inflammateur 8 est porté par un porte-inflammateur 9 qui est fixé par sertissage dans l'extrémité du corps 2, l'extrémité rabattue de la paroi 3 constituant la face plane 4.

L'inflammateur 8 peut être un inflammateur à percussion ou un inflammateur électrique comme représenté sur les figures. Dans ce dernier cas une bague-shunt 10 peut assurer en cas de besoin la protection électrique de l'inflammateur. L'inflammateur 8 est entouré par un capuchon métallique fragmentable 11 contenant une poudre d'allumage 12, comme par exemple une poudre du type bore/nitrate de potassium.

Un joint d'étanchéité 13 est interposé entre l'inflammateur 8 et le porte-inflammateur 9 qui est lui-même en appui contre une bague de calage cylindrique 14 en appui contre un épaulement interne présenté par la paroi latérale 3. Une grille métallique 15 sépare le compartiment d'allumage ainsi constitué du reste du générateur qui comporte la chambre de combustion proprement dite. Cette chambre de combustion se termine par une tuyère placée en regard de l'ouverture 7 du corps 2 du générateur 1.

Cette tuyère est constituée par une pièce métallique 16 présentant un orifice central 17 fermé par un opercule claquable 18 ainsi que par un cône métallique convergent 19. La tuyère est fixée dans l'ouverture 7 du corps du générateur par sertissage de l'extrémité du dit corps ; l'extrémité rabattue de la paroi latérale 3 constituant la face plane 5.

Un chargement pyrotechnique solide 20 générateur de gaz est disposé dans la chambre de combustion ainsi constituée.

Ledit chargement est sous la forme d'un bloc à section constante. Préférentiellement ce bloc 20 repose sur un ressort 21 lui-même en appui sur la grille de séparation 15. Avantageusement ce bloc est calé du côté de la tuyère 16, 19 par une grille métallique 22 en appui contre un épaulement interne présenté par la paroi latérale 3.

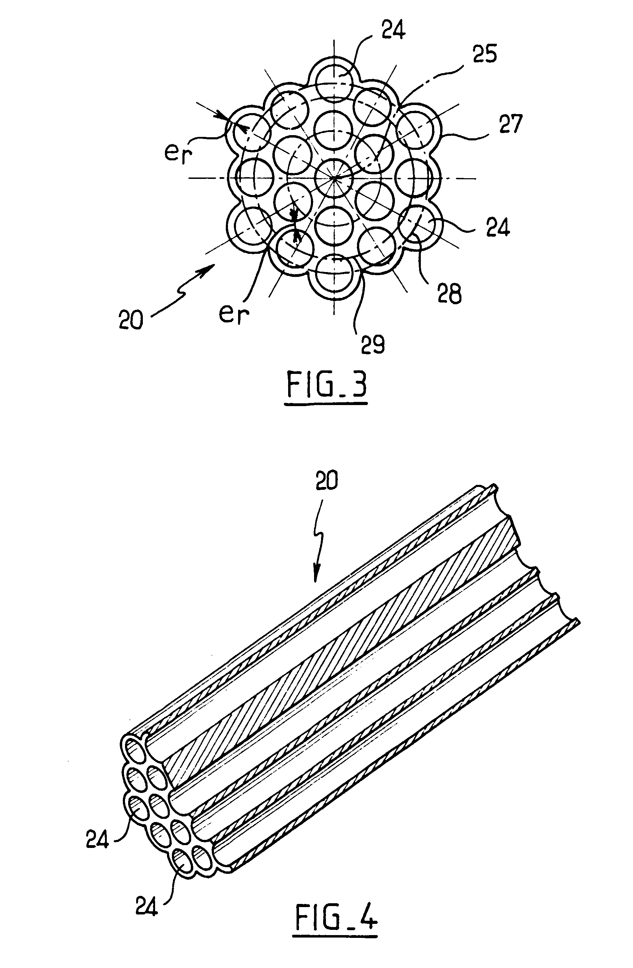

On décrit maintenant en détail le bloc 20 de chargement pyrotechnique en se référant plus particulièrement aux figures 3 et 4.

Selon une caractéristique essentielle de l'invention le bloc 20 est perforé par une pluralité de canaux 24 parallèles à l'axe 25 du dit bloc qui est lui-même disposé entre l'inflammateur 8 et la tuyère 16, 19 de manière à ce que les dits canaux 24 soient parallèles à l'axe 26 du corps du générateur. Ainsi les canaux 24 sont disposés en regard de l'inflammateur 8 de manière à ce que l'allumage du bloc puisse être assuré par l'ensemble des surfaces internes des canaux 24 et sur toute la hauteur de ces dernières.

De manière à garantir une fiabilité complète de la loi de combustion, le bloc 20 de chargement pyrotechnique présente des épaisseurs radiales "er" à brûler toutes identiques avec une géométrie permettant un allumage simultané par les surfaces internes des dits canaux 24 et par la surface latérale externe 27 du bloc.

C'est pour cette raison que, selon une réalisation préférée de l'invention, si l'on se place dans un plan transversal au bloc 20, les centres des canaux périphériques ne sont pas tous équidistants du centre 25 du dit bloc, mais se répartissent alternativement, dans ce plan, sur deux cercles 28 et 29 concentriques mais distincts.

Cette géométrie qui est représentée aux figures 3 et 4, se distingue de la géométrie traditionnelle connue pour les blocs lobés multiperforés et décrite, par exemple, dans le brevet américain 1,077,320. Préférentiellement un tel bloc 20 comportera au total 19 canaux dont un canal central. Préférentiellement encore lesdits canaux 24 seront des canaux cylindriques comme représentés sur les figures.

Les blocs présentant la géométrie requise pour la présente invention seront avantageusement obtenus par extrusion.

Deux familles de compositions pouvant être mises en forme par extrusion sont préférées dans le cadre de la présente invention.

La première famille est constituée par les compositions génératrices de gaz à base de nitrocellulose et de nitroglycérine encore dites "à double base".

La seconde famille est constituée par les compositions pyrotechniques composites comprenant essentiellement une résine silicone comme liant et un mélange de perchlorate d'ammonium et de nitrate de sodium comme charge énergétique.

Selon un mode préféré de réalisation de l'invention présenté à la figure 1, le générateur 1 est prolongé, du côté du corps 2 où est fixée la tuyère 16, 19 par un diffuseur cylindrique creux 30.

Ce diffuseur 30 comprend :
**i)** une extrémité 31 fermée
**ii)** une extrémité 32 ouverte qui se fixe sur l'extrémité du corps 2 du générateur 1, par exemple par moletage ou sertissage, en regard de l'orifice 17 de sortie de la tuyère 16, 19,
**iii)** un évent latéral 33 d'évacuation des gaz sur laquelle se fixe le coussin gonflable de protection.

Ce diffuseur sera également constitué par un alliage de zinc et d'aluminium ou un acier.

Comme représenté à la figure 2, le générateur 1 comprendra avantageusement une extrémité amincie 34 prolongé par un cran de positionnement 35 de manière à permettre une fixation aisée et fiable du diffuseur 30.

Le fonctionnement d'un générateur selon l'invention est le suivant. En cas de collision, un signal émis par un détecteur de collision provoque la mise à feu de l'inflammateur 8 qui allume la poudre d'allumage 12. Les gaz de combustion de la poudre 12 provoquent l'éclatement du capuchon 11 et viennent entourer la surface extérieure du bloc 20 ainsi que les surfaces intérieures des canaux 24 en provoquant ainsi l'allumage du bloc 20 sur toutes les surfaces de contact et cela sur toute la hauteur du bloc 20.

Dans la mesure où l'épaisseur à brûler "er" a été déterminée dans ce but en fonction de la vitesse de combustion de la composition constituant le bloc 20, il est ainsi possible d'assurer la combustion complète du bloc 20 en moins de 10 millisecondes sans risques d'explosion.

Lorsque la pression dans la chambre de combustion atteint la valeur de rupture de l'opercule 18, ce dernier se rompt et les gaz pénètrent dans le diffuseur 30 pour gonfler le coussin fixé sur l'évent 33.

Un générateur selon l'invention convient ainsi particulièrement bien pour gonfler un coussin latéral de protection des occupants d'un véhicule automobile.

Les exemples qui suivent illustrent une possibilité de mise en oeuvre de l'invention sans en limiter la portée.

### Exemple 1

On a réalisé un ensemble générateur-diffuseur conforme à celui représenté à la figure 1. Les caractéristiques de cet ensemble étaient les suivantes :
- générateur : longueur 92mm
   diamètre extérieur 24mm
   diamètre intérieur 16mm
   inflammateur axial commercialisé par Davey Bickford
   tuyère : opercule taré à 8MPa (80 bar)
- diffusseur: longueur 114mm 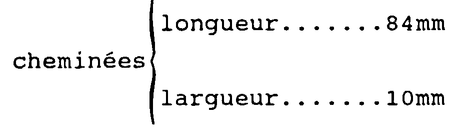
- chargement pyrotechnique :
   composition : poudre à double base nitrocellulose-nitroglycérine (60:40))
   hauteur 44mm
   masse 5g
   canaux : 19 canaux cylindriques de diamètre intérieur 2,4mm.
   épaisseur radiale à brûler 0,25mm

Cet ensemble a été associé à un coussin gonflable de volume 12 litres et a conduit à un fonctionnement satisfaisant.

Les résultats de tir en caisson de 10 litres ont été les suivants:
. temps de fonctionnement : 9,5 millisecondes (temps pour 90% de la pression maximale).
. pression maximale : 0,420 MPa soit 4,20 bar.

### Exemple 2

on a reproduit l'exemple 1 en utilisant un chargement pyrotechnique présentant les caractéristiques suivantes : 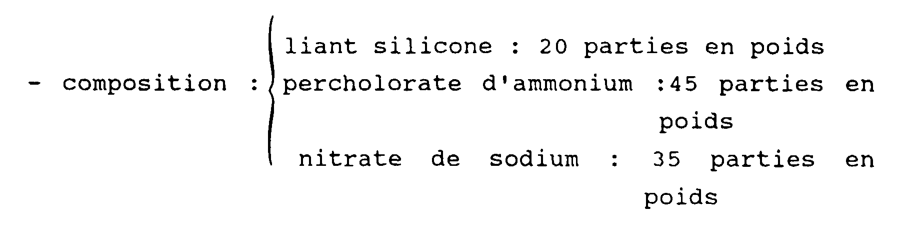
- hauteur : 44mm
- masse : 6g
- canaux: 19 canaux cylindriques de diamètre intérieur 1,6mm
- épaisseur à brûler : 0,46mm

Les résultats de tir en caisson de 10 litres ont été les suivants :
. temps de foctionnement : 9,1 millisecondes (temps pour 90% de la pression maximale),
. pression maximale : 0,493 MPa soit 4,93 bar.

## Revendications

1. Générateur (1) pyrotechnique de gaz chauds, destiné notamment à gonfler un coussin latéral de protection, comportant un corps cylindrique creux (2) qui présente une paroi latérale (3) terminée par deux faces sensiblement planes (4,5) et dont la longueur (L) des génératrices est supérieure à son diamètre extérieur (D), le dit corps contenant notamment un inflammateur (8) et un chargement pyrotechnique solide (20) générateur de gaz séparé de l'inflammateur (8) par une grille métallique de séparation (15), ladite paroi latérale (3) étant pleine sur toute la longueur de chacune de ses génératrices et chacune des faces planes (4,5) présentant une ouverture (6,7), ledit inflammateur (8) étant fixé dans l'une des dites ouvertures (6), une tuyère (16,19) elle-même fermée par un opercule (18) étant fixée dans l'autre ouverture (7) et le dit chargement pyrotechnique étant sous la forme d'un bloc perforé par une pluralité de canaux (24) parallèles à l'axe (25) dudit bloc qui est lui-même disposé entre l'inflammateur (8) et la tuyère (16,19) de manière à ce que lesdits canaux soient parallèles à l'axe (26) du corps du générateur, caractérisé en ce que les canaux (24) sont des canaux cylindriques et en ce que le bloc (20) de chargement pyrotechnique présente des épaisseurs radiales (er) à brûler toutes identiques, ledit bloc (20) possédant un canal (24) central et présentant une géométrie qui permet un allumage simultané par les surfaces internes desdits canaux et par la surface latérale du bloc.

2. Générateur selon la revendication 1, caractérisé en ce que, dans un même plan transversal, les centres des canaux périphériques du bloc (20) ne sont pas tous équidistants du centre (25) du dit bloc mais se répartissent alternativement, dans ce plan, sur deux cercles (28,29) concentriques distincts.

3. Générateur selon la revendication 2, caractérisé en ce que le chargement pyrotechnique est constitué par une composition pyrotechnique choisie dans le groupe constitué par les compositions de base de nitrocellulose et de nitroglycérine.

4. Générateur selon la revendication 2, caractérisé en ce que le chargement pyrotechnique est constitué par une composition pyrotechnique composite comprenant essentiellement une résine silicone comme liant et un mélange de perchlorate d'ammonium et de nitrate de sodium comme charge énergétique.

5. Générateur selon la revendication 1, caractérisé en ce que le chargement pyrotechnique (20) repose sur un ressort (21) lui-même en appui sur la grille de séparation (15).

6. Générateur selon la revendication 1, caractérisé en ce qu'il est prolongé, du côté du corps (2) où est fixée la tuyère (16,19), par un diffuseur cylindrique creux (30).

7. Générateur selon la revendication 6, caractérisé en ce que ledit diffuseur (30) comprend :
i) une extrémité (31) fermée,
ii) une extrémité (32) ouverte qui se fixe sur l'extrémité du corps (2) du générateur qui porte la tuyère (16,19),
iii) un évent latéral (33) d'évacuation des gaz.

8. Générateur selon la revendication 6, caractérisé en ce que ledit diffuseur (30) comprend :
i) une extrémité (31) fermée,
ii) une extrémité (32) ouverte qui se fixe sur l'extrémité du corps (2) du générateur qui porte la tuyère (16,19),
iii) des trous latéraux d'évacuation des gaz.

9. Utilisation d'un générateur selon l'une quelconque des revendications 1 à 8 pour gonfler un coussin latéral de protection des occupants d'un véhicule automobile.

## Claims

1. Pyrotechnic hot-gas generator (1), intended especially for inflating a side airbag, comprising a hollow cylindrical body (2) which has a side wall (3) terminating in two approximately plane faces (4, 5) and the length (L) of the generatrices of which is greater than its external diameter (D), the said body containing especially an igniter (8) and a solid pyrotechnic gas-generating charge (20) which is separated from the igniter (8) by a metal separating mesh (15), the said side wall (3) being solid over the entire length of each of its generatrices and each of the plane faces (4, 5) having an opening (6, 7), the said igniter (8) being fastened in one (6) of the said openings, a nozzle (16, 19), itself closed by a cover (18), being fastened in the other opening (7) and the said pyrotechnic charge being in the form of a block perforated by a plurality of channels (24) parallel to the axis (25) of the said block which itself is located between the igniter (8) and the nozzle (16, 19) so that the said channels are parallel to the axis (26) of the body of the generator, characterized in that the channels (24) are cylindrical channels and in that the block (20) of pyrotechnic charge has radial thicknesses (er) to burn, the thicknesses all being the same, the said block (20) possessing a central channel (24) and having a geometry which allows simultaneous ignition via the internal surfaces of the said channels and via the lateral surface of the block.

2. Generator according to Claim 1, characterized in that, in the same transverse plane, the centres of the peripheral channels of the block (20) are not all equidistant from the centre (25) of the said block but are distributed, in this plane, alternately over two separate concentric circles (28, 29).

3. Generator according to Claim 2, characterized in that the pyrotechnic charge consists of a pyrotechnic composition chosen from the group consisting of nitrocellulose and nitroglycerine base-compositions.

4. Generator according to Claim 2, characterized in that the pyrotechnic charge consists of a composite pyrotechnic composition essentially comprising a silicone resin as binder and a mixture of ammonium perchlorate and sodium nitrate as energy-releasing charge.

5. Generator according to Claim 1, characterized in that the pyrotechnic charge (20) rests on a spring (21) which itself bears on the separating mesh (15).

6. Generator according to Claim 1, characterized in that it is extended, on that side of the body (2) where the nozzle (16, 19) is fastened, by a hollow cylindrical diffuser (30).

7. Generator according to Claim 6, characterized in that the said diffuser (30) comprises:
i) a closed end (31);
ii) an open end (32) which fits onto that end of the body (2) of the generator which carries the nozzle (16, 19);
iii) a side vent (33) for discharging the gases.

8. Generator according to Claim 6, characterized in that the said diffuser (30) comprises:
i) a closed end (31);
ii) an open end (32) which fits onto that end of the body (2) of the generator which carries the nozzle (16, 19);
iii) lateral holes for discharging the gases.

9. Use of a generator according to any one of Claims 1 to 8 for inflating a side airbag for protecting the occupants of a motor vehicle.

## Patentansprüche

1. Heißes Gas erzeugender, pyrotechnischer Gasgenerator (1), insbesondere zum Aufblasen eines Seitenaufprallschutz-Airbags, umfassend einen hohlen zylindrischen Körper (2), der eine von zwei im wesentlichen ebenen Flächen (4, 5) abgeschlossene Seitenwand (3) aufweist und dessen Länge (L) der Mantellinien größer als sein Außendurchmesser (D) ist, wobei der Körper insbesondere einen Zünder (8) und eine feste, pyrotechnische Ladung (20) enthält, die einen vom Zünder (8) durch ein metallisches Trenngitter (15) getrennten Gasgenerator darstellt, wobei die Seitenwand (3) auf der gesamten Länge ihrer Mantellinien massiv ist und jede der ebenen Flächen (4, 5) eine Öffnung (6, 7) aufweist, wobei der Zünder (8) in einer der Öffnungen (6) befestigt ist, wobei eine Düse (16, 19), die mit einem Innenhütchen (18) verschlossen ist, in der anderen Öffnung (7) befestigt ist und die pyrotechnische Ladung in Form eines Blocks vorliegt, der in einer Mehrzahl von mit der Achse (25) dieses Blocks parallelen Kanälen (24) perforiert ist, wobei der Block zwischen dem Zünder (8) und der Düse (16, 19) so angeordnet ist, daß die Kanäle parallel mit der Achse (26) des Generatorkörpers verlaufen, dadurch gekennzeichnet, daß es sich bei den Kanälen (24) um zylindrische Kanäle handelt und daß der Block (20) der pyrotechnischen Ladung durchweg identische radiale Verbrennungsdurchmesser (er) aufweist, wobei der Block (20) einen zentralen Kanal (24) besitzt und eine Geometrie aufweist, die ein gleichzeitiges Entzünden an den inneren Oberflächen der Kanäle und an der seitlichen Oberfläche des Blocks ermöglicht.

2. Generator nach Anspruch 1, dadurch gekennzeichnet, daß in einer gleichen Querebene die Zentren der peripheren Kanäle des Blocks (20) sich nicht alle im gleichen Abstand vom Zentrum (25) des Blocks befinden, sondern in dieser Ebene abwechselnd auf zwei verschiedenen konzentrischen Kreisen (28, 29) verteilt sind.

3. Generator nach Anspruch 2, dadurch gekennzeichnet, daß die pyrotechnische Ladung aus einer pyrotechnischen Zusammensetzung gebildet ist, die aus der Gruppe der Zusammensetzungen auf der Basis von Nitrocellulose und Nitroglycerin ausgewählt ist.

4. Generator nach Anspruch 2, dadurch gekennzeichnet, daß die pyrotechnische Ladung aus einer pyrotechnischen Verbundzusammensetzung gebildet ist, die im wesentlichen ein Siliconharz als Bindemittel und eine Mischung aus Ammoniumperchlorat und Natriumnitrat als Energiequelle umfaßt.

5. Generator nach Anspruch 1, dadurch gekennzeichnet, daß die pyrotechnische Ladung (20) auf einer Feder (21) ruht, die ihrerseits auf ein Trenngitter (15) gestützt ist.

6. Generator nach Anspruch 1, dadurch gekennzeichnet,, daß er auf der Seite des Körpers (2), wo die Düse (16, 19) befestigt ist, in einer hohlen, zylindrischen Diffusionsvorrichtung ausläuft.

7. Generator nach Anspruch 6, dadurch gekennzeichnet,, daß die Diffusionsvorrichtung (30) folgendes umfaßt:
i) ein geschlossenes Ende (31),
ii) ein offenes Ende (32), das an dem Ende des Körpers (2) des Generators, der die Düse (16, 19) trägt,
befestigt ist, und iii) eine seitliche Gasabzugsöffnung (33).

8. Generator nach Anspruch 6, dadurch gekennzeichnet, daß die Diffusionsvorrichtung (30) folgendes umfaßt:
i) ein geschlossenes Ende (31),
ii) ein offenes Ende (32), das an dem Ende des Körpers (2) des Generators, der die Düse (16, 19) trägt,
befestigt ist, und iii) seitliche Gasabzugslöcher.

9. Verwendung eines Generators nach einem der Ansprüche 1 bis 8 zum Aufblasen eines Seitenairbags zum Schutz von Insassen eines Kraftfahrzeugs.
